# EUROPEAN PATENT APPLICATION

(11) **EP 2 083 525 A1**
(43) Date of publication of application: **29.07.2009**
(21) Application number: 08150731.1
(22) Date of filing: 28.01.2008
(51) Int. Cl.: H04H 60/04

(54) **System to process a plurality of audio sources**

(71) Applicant: Merging Technologies S.A., 1070 Puidoux (CH)
(72) Inventor: Cellier, Claude, 1071 Chexbres (CH); Van Kempen, Bertrand, 74500 Neuvecelle (FR)
(74) Representative: Leman Consulting S.A.

(57) **Abstract**

Today, even despite the huge increase of available processing power, the commercial OS are not able to guarantee the response time necessary to process a plurality of audio sources and output the results in a very short time without using additional means such as dedicated DSP or other processing elements such as FPGA.

This problem is overcome by means of a system to process a plurality of audio sources, this system having at least a central processing unit CPU and input and output capabilities, this system being **characterized in that**, the central processing unit comprises at least two cores, each core representing a micro processing unit, at least one core being loaded with a standard operating system and at least one second core being loaded with a real-time operating system (RTOS) in charge of processing audio signals which comprise audio sources and audio outputs.

## Description

### Field of the invention

The present invention concerns the field of audio processing, in particular real-time audio mixing and enhancing devices.

### Background Art

Along with the development of digital technologies, recent digital mixers can process audio signals from a large number of input and output channels, and also have a wide range of types of parameters that can be set in each input and output channel.

The analogue signals from various sound sources are converted into digital signals and are manipulated arithmetically in order to achieve the mixer function i.e. adjusting the level, equalizing, modifying the sound position (for stereo or multi spatial) etc.

The centre of such sound manipulation is usually a dedicated microprocessor based machine which comprises high speed arithmetic capabilities as well as a high speed input and output data path. Such machine are Digital Mixers or Digital Audio Workstations (DAW) comprising a number of DSP processing cards, on which the actual mixing engine resides, and a more generic computer platform, handling all non time-critical aspects (screen refreshes, peak or VU meter displays, human interface, storage access and/or network management activities).

More recently some manufacturers implemented DAWs with the essential Digital Audio Processing part (mixing, bussing, various plug-in effects) on the actual CPUs of a PC rather than on dedicated hardware. While this shows tremendous savings in cost by removing the need for any additional specialized hardware, the fact that those PCs are essentially run by a commercial Operating System (0S) such as Windows XP or Apple OS X, impacts the real-time performance of such commercial systems and limits their suitability to the consumer or "semi-professional" market segments. In fact one of the fundamental difference between consumer-grade products and really professional products, is the ability of the mix engine to dependably provide at all times audio samples in a controlled manner and with a minimal and deterministic latency. Experience shows that OS such as Windows XP and now VISTA do not offer any guaranteed operation for time-critical processes and while skilled programmers may hope for their real-time program to be handled in a regular fashion by such OS, occasional delays may often cause a process to be delayed by 10 to 20 ms, and there is absolutely no guarantee by Microsoft that even those 20 ms are a worst-case scenario. Apple's OS X might be slightly better than Microsoft's OS in terms of response time but still doesn't match the short latency of time-critical processes the way deterministic RTOS are able to provide.

On the contrary, typical professional mixers using dedicated hardware offer a total input-to-output latency of no more than 3-4 ms and often perform even better than this. Clearly, it is impossible to achieve this sort of performance on a generic computer, using a standard 0S.

In the industrial world there are several real-time OS that do actually provide "embedded" performance for time-critical industrial tasks, such as robot control or other time-critical communication or manufacturing tasks. Unfortunately these systems, while particularly well suited to an industrial environment do not provide the sort of flexibility that common OS such as Windows offer and hence are confined to industrial use rather than offices or audio/video studios.

Throughout 2006, desktop PCs featured a series of processors that, while slower at the clock-speed level, were faster in real-time usage, allowing for unprecedented amounts of multitasking. As the calendar flips to 2007, we are firmly entrenched in the world of multicore processors. Further, based upon the road maps of both Intel and AMD, it is clear that multi-core CPUs are an integral part in the future strategy for the microprocessor market.

In 2007, quad-core CPUs have been introduced commercially and with two such CPUs, eight-core systems can be assembled. The trend for the following years shows a good chance that sixteen-core (or even more) processors will become available on the market.

### Brief description of the invention

Today, even despite the huge increase of available processing power, the commercial OS are not able to guarantee the response time necessary to process a plurality of audio sources and output the results in a very short time without using dedicated DSP or other processing elements such as FPGA.

This problem is overcome by means of a system to process a plurality of audio sources, this system having at least a central processing unit CPU and input and output capabilities, this system being characterized in that, the central processing unit comprises at least two cores, each core representing a micro processing unit, at least one core being loaded with a standard operating system and at least one second core being loaded with a real-time operating system (RTOS) in charge of processing audio signals which comprise audio sources and audio outputs.

By standard operating system it is meant OS such as Windows XP or Vista, Apple OS X or any operating systems for general purpose, named GPOS in the text thereafter. Such OS is in charge of the man-machine interface, handling the keyboard, mouse, display, hard drives etc.

Real-time operating system is a multitasking operating system intended for deterministic real-time applications. Such applications include embedded systems (programmable thermostats, household appliance controllers, mobile telephones), industrial robots, spacecraft, industrial control (see SCADA), and scientific research equipment.

The present invention offers the "best of both worlds", i.e. the possibility to benefit from all the advantages offered by a standard OS, while at the same time being able to offer absolutely guaranteed latency control over the time-critical audio engine and audio I/O itself. One of the solutions described below is to split the processing power of a multi-core CPU (such as the recently introduced Intel Core2 Duo or Core2 Quad chips) or of several single/multi core CPUs between one or more cores handling the time-critical audio engine processes and the remaining core(s) handling the non-critical time audio/video processes and less time-critical management tasks. The innovation consists in assigning (either manually or automatically the highly time-critical audio /or video) processing tasks to the core(s) that operate under real-time OS while the less time-critical tasks are left to the remaining core(s) which are operating under a regular OS.

### Brief description of the figures

The invention will be better understood thanks to the figures attached in which :
- figure 1 shows the block diagram with a four-core central processing unit,
- figure 2 shows the data flow through the RTOS and the GPOS
- figure 3 shows the more detailed functional modules within the RTOS Audio Mix Engine
- figure 4 shows a detail of the signal data flow through the various components, including the optional GPOS inserts.
- figure 5 shows the logical data and control flow through the entire system's architecture. Including the various Audio and Video I/O Unit solutions for ultra-low latency audio/video acquisition and reproduction
- figure 6 (A, B & C) describe the various Network topologies that may satisfy the requirements above in more detail, in the case of using a digital communication network, e.g. Ethernet-type network.
- figure 7 (A, B & C) show the timing diagrams for the respective Network topologies as described in Figure 6.
- figure 8 shows the timing diagram of the RTOS/GPOS shared buffer

### Detailed description of the invention

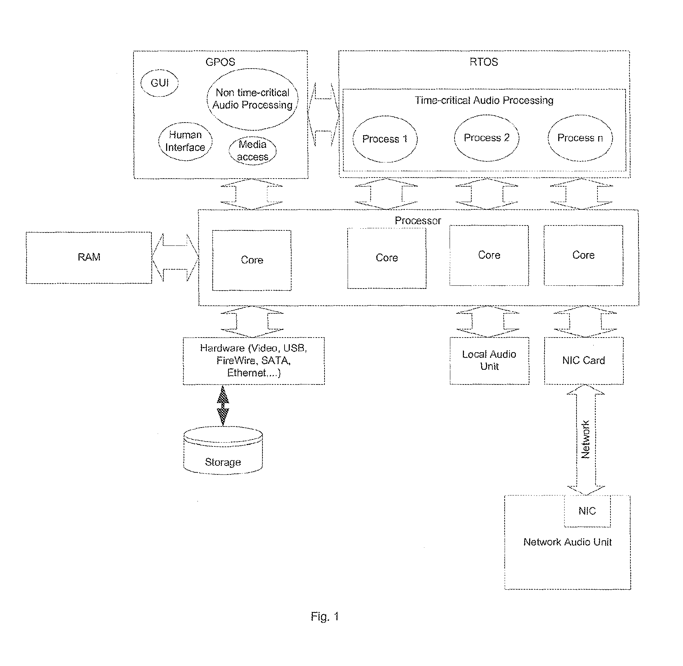

Figure 1 illustrates the architecture of a central processing unit having, for example, four cores, one dedicated to the GPOS (General Purpose Operating System) and three RTOS (Real-time operating system). The GPOS is connected to the various resources of the machine such as graphic card, USB, Firewire and other Network interfaces and also controls access to storage such as Hard disk. This allows the GPOS access to mass storage that contains both operating systems. The GPOS is dedicated to handling the graphics/GUI interface, man-machine interface, analysing and reporting tools.

In the example shown in the figure 1, three cores are dedicated to the RTOS (however other arrangements such as only one or two cores are possible as well). Furthermore it is also possible to share a Core between RTOS and GPOS, whereby the RTOS has a strict priority over GPOS on the Core resources. Having all time-critical audio processing residing on one or a plurality of cores guarantees a limited and deterministic latency even when processing a large number of audio channels (tested embodiments have shown working implementations with 384 channels, but more channels are certainly within the range of this invention with further progress in total quantity of cores available and speed increase of today's CPUs). The RTOS core(s) are in charge of sampling the audio channels from the Audio Unit Input section(s), processing the sampled data in accordance with the parameters set at the GPOS level and finally supplying the result to the Audio Unit Output section(s). Since the man-machine interface is located on the GPOS, the commands are entered at the GPOS level and transmitted to the RTOS levels. This further allows maximizing the processing power of the RTOS core(s) to primarily handle the most time-critical tasks.

In one preferred embodiment, the RTOS communicates (receives and outputs) the audio samples via one or a plurality of LAU (Local Audio Unit), directly connected to the internal (PCI or PCIe) busses of the computer. The Audio Unit LAU comprises a means to signal, via an interrupt mechanism or register to be polled by the RTOS, the availability of a new block of incoming audio data signal. In order to maintain the frequency of occurrence of such interrupts at a reasonable level, such audio data is communicated in blocks of several audio samples. It has been found that block processing in sizes from 16 contiguous samples to 64 contiguous samples (at sampling rates of 44.1 or 48 kHz) provides an optimal solution that fits the requirement of a total processing latency from incoming to outgoing signal of under 5 ms. Processing in blocks shorter than 16 samples is possible but significantly reduces the performance of the system due to increased penalties incurred by context switching times, as well as interrupt/polling response times in the RTOS. Processing audio data at higher sampling rates (such as 96 kHz, 192 kHz or even higher) is similarly supported. When operating at higher sampling rates, the size of the blocks can be increased proportionally while preserving equivalent low latency values from input to output.

In an alternate embodiment, the RTOS communicates (receives and outputs) the audio data via one or more NAUs (Network attached Audio Unit), through a network interface (via an Ethernet adapter for example). If such is the case, the NIC (Network Interface Card) has also to be under the direct control of the RTOS by means of a dedicated driver since the data stream coming from the network should also be processed with minimal latency, which is not possible if the NIC is under control of the GPOS.

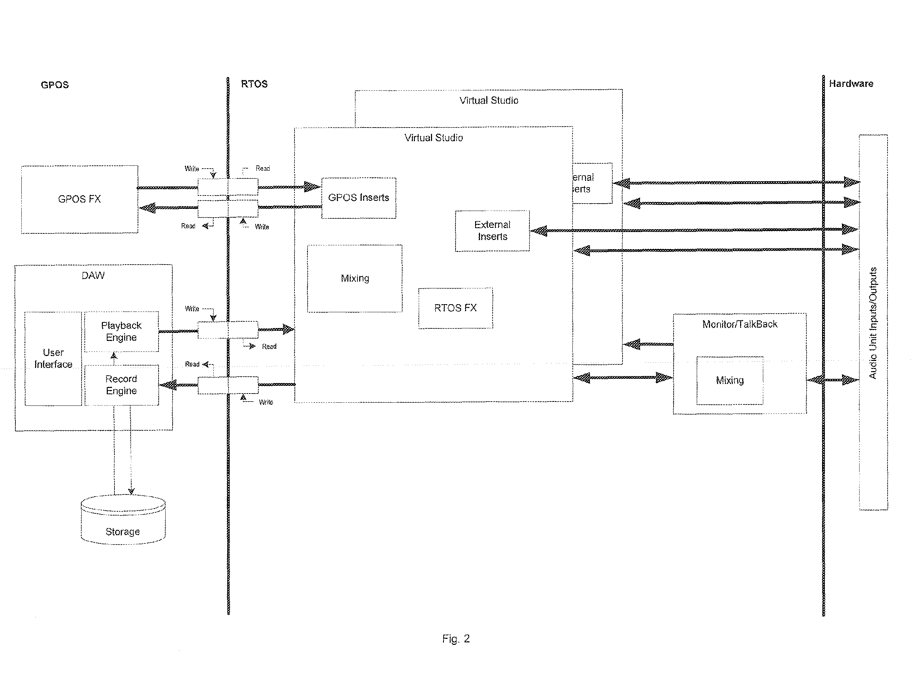

Figure 2 illustrates the connexion between the GPOS and the RTOS. In a typical Workstation application, where not only the Audio needs to be processed in real-time but in addition may have to be recorded (or played back), besides the parameters set at the GPOS level and sent to the RTOS level, the GPOS is assigned to store and/or stream content from a storage unit (such as a hard drive, a plurality of hard drives, or any other mass-storage medium such as Flash, SAN, NAS, etc). As already explained, the management and communication with the various non-time critical peripherals is assigned to be handled by the GPOS which comprises the relevant drivers and software. In case that the GPOS is used to stream audio content, this content must first be entered (written) into a shared buffer (which can be of various types such as FIFO, circular buffer or double buffer topology) whose size is designed to be large enough to "swallow" the worst case response times from the GPOS side to guarantee un-interrupted signal flow to the RTOS side. The output (read portion) of the buffer is synchronised with the audio input/output and treats the playback audio signals in small packets in the same manner as if these were another live input.

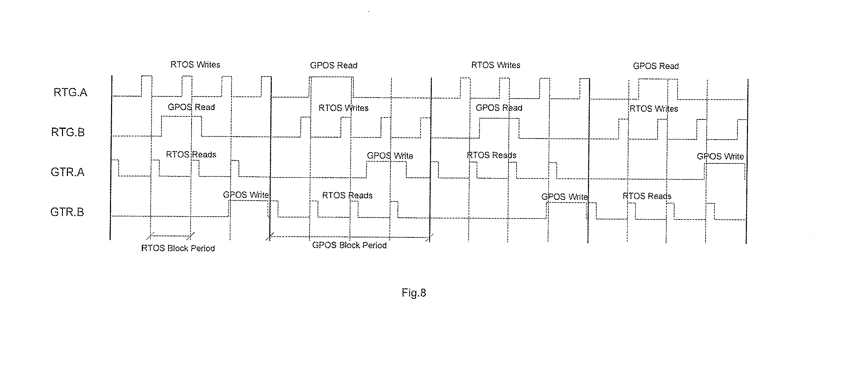

According to a preferred embodiment, the communication between the RTOS and the GPOS uses two double buffers (one for each direction) which prevent reading and writing simultaneously. When a buffer is written by a party, the other party can only read that buffer and vice-versa. A locking mechanism is implemented in the double buffer configuration that avoids conflict in asynchronous management of a common resource. Figure 8 describes the time diagram of a preferred embodiment of such shared buffer in a double-buffer topology. Both RTOS to GPOS and GPOS to RTOS bridges consist of double buffers. While buffer A is accessed in Write mode by the RTOS, buffer B is accessed in Read mode by the GPOS. During next GPOS Block Period, Buffer A is accessed in Read mode by the GPOS and Write mode by the RTOS.

One of the most stringent scenarios for a minimal response time is whenever musicians or singers (as in Karaoke systems), while singing or playing their own instrument, need to be supplied with a mix of their own recorded signal and a simultaneous playback of pre-recorded additional audio signals. This typical situation requires a total latency of the player's own signal to be well under 5 ms for best musical experience. While pre-recorded audio signals to be additionally mixed to this signal can easily be provided, via proper read-ahead mechanisms from any storage medium, under the control of the GPOS, it is only by using an audio mixing engine running under the RTOS that near-time coincident output playback may be fed to the musician (or singer) in such a way that his own instrument or voice is not lagging beyond any painful delay threshold. The implementation which is described here allows such highly time-accurate feedback without having to resort to additional processing units (such as direct-monitoring or zero-latency mix units) as typically used by other manufacturers of GPOS-based audio processing software. Not only does this reduce the cost since no additional direct monitoring hardware is required but it offers a much higher degree of flexibility and sound enhancement possibilities, which direct monitoring units are unable to provide without complex additional circuitry.

Since the GPOS is largely used in computers, firms specialized in sound enhancements plug-ins GPOS FX (often also referred to as Direct-X or VST effects and other similar plug-in architectures) have developed their sound manipulation software only for such generic platforms. It is however part of this invention to be able to integrate such plug-in effects via the implementation of appropriate interface communication channels (GPOS Inserts). By providing similar shared buffers between the RTOS and the GPOS audio processing sections (similar to the above described buffers required for audio recording or playback to/from storage), it is possible to insert such GPOS-based sound enhancement means from and to the RTOS main audio processing unit. One should however accept that, in such cases, minimal audio roundtrip latency can no longer be guaranteed since when leaving the RTOS environment, the real-time response constraint is no longer guaranteed by the audio processing elements residing in the GPOS unit. Again adequate allowance must be provided in the size of the buffers (both from RTOS to GPOS and GPOS to RTOS) to handle worst case response times incurred in the GPOS side without disrupting continuous signal flow between both sides. Additionally such buffers must also take care of the possible mismatch in processing block size between the RTOS unit (where typically processing can be done in blocks as short as 16 samples) and the GPOS based processes, which typically handle much larger blocks, containing 512, 1024 or even more samples.

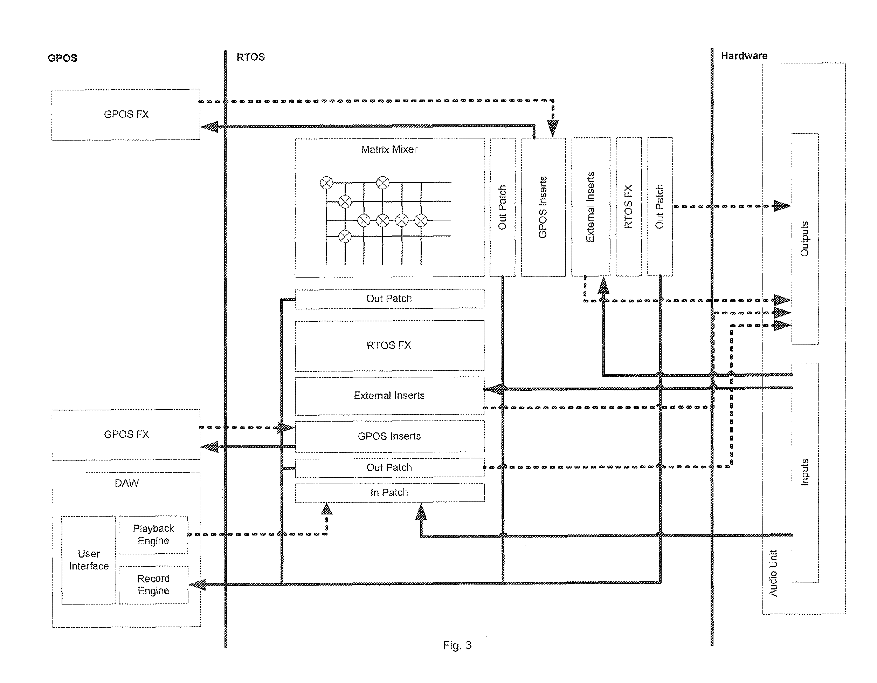

Figure 3 shows a graphical representation of the specific components that may be part of a typical Audio Mix Engine (Virtual Studio). It also shows a typical signal flow through those elements.

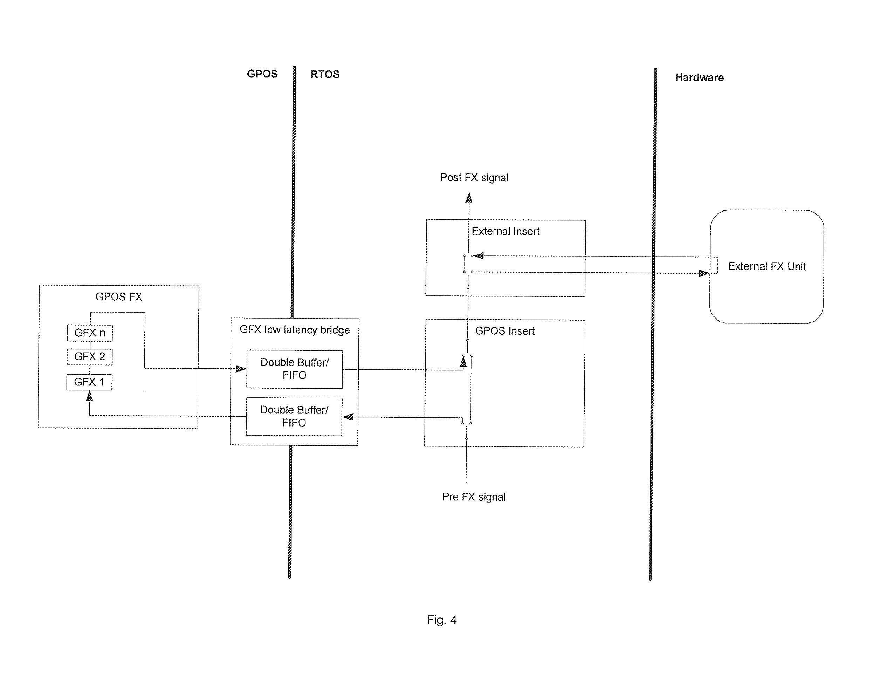

Figure 4 shows a detailed view of the signal flow through the various components, including the optional GPOS inserts and External FX Unit. A GFX low latency bridge is designed to provide the adequate buffering of data between the low latency RTOS and the non deterministic GPOS.

There are numerous systems that use digital communication networks, particularly of Ethernet type to transmit audio and/or video over such networks. However, due to the fact that the transmission, forwarding and reception latencies are not guaranteed on such general purpose networks, these systems must use large buffers to avoid any disruption in audio or signal flow upon delay variations between subsequent arrival times of successive data packets.

A second part of this invention allows to minimize or even entirely remove the need for such buffers thanks to a strict control of the emission and reception of those successive audio and/or video packets. Minimizing or removing such buffers in turn greatly reduces the system's overall transit time (or latency) from incoming to outgoing signals, which is one of the main goal to be achieved under the present invention. While some manufacturers offer a solution to this problem (such as described in Digigram's patent WO 03/023759), by using proprietary devices, such solutions cannot be employed with standard NIC, as almost universally present in today's computers. In the present embodiment, by keeping the emission and reception of audio packets under the deterministic control of the RTOS, it is possible to use standard (or generic) NICs such as those found in any current laptop or desktop computer and simultaneously achieve high Network bandwidth usage (typically allowing up to several hundreds of audio channels to be conveyed over a Gbit-type Ethernet port) and extremely low roundtrip latencies from incoming to outgoing signals (in the sub-millisecond to few millisecond range).

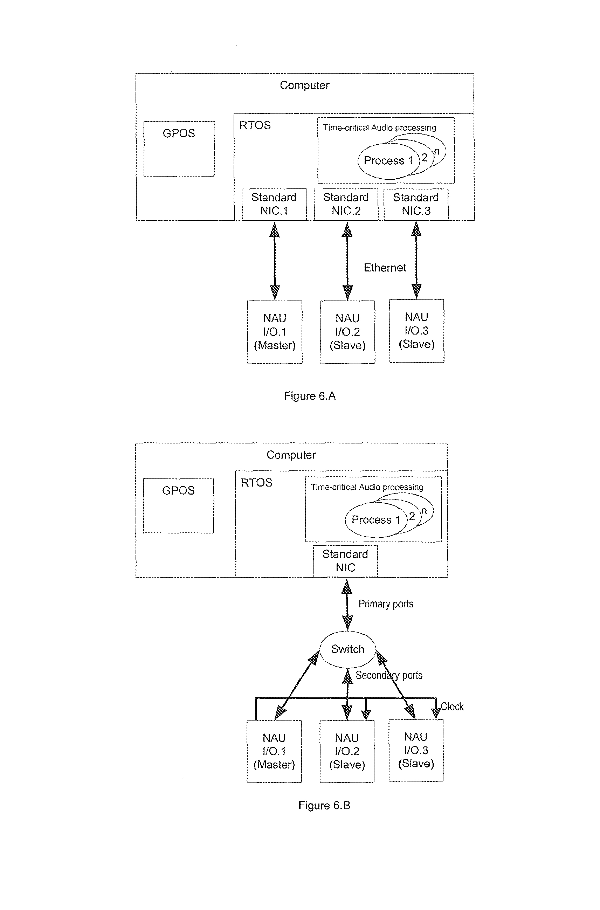

Figure 6 A to C illustrate various ways the audio signals may be emitted or received from a single or plurality of external Audio I/O Units by means of a digital communication network, e.g. Ethernet-type network. The inherent characteristics of such a network (which is designed for general purpose data transmission) do not permit the synchronizing of several units to such a degree that is required in professional audio acquisition and reproduction without additional means such as external synchronization links between the several I/O units. In the described embodiment, by keeping the emission of audio packets under the deterministic control of the RTOS, and via additional synchronization methods such as described below, several distinct Audio I/O units can be synchronized and all aligned to sample and even sub-sample accuracy.

In Figure 6A, by issuing a synchronous emit command to a plurality of NIC interfaces, after having adequately pre-loaded the NIC TX buffers with Audio data, Synchronization to within sub-sample accuracy is achieved between several separate NAU Audio units. Audio units are designed to each include a local PLL (Phase Locked Loop) which is well-known in the industry, to synchronize each audio unit with low-jitter clocks to guarantee high audio quality while still maintaining long-term frequency and phase coherence between the units.

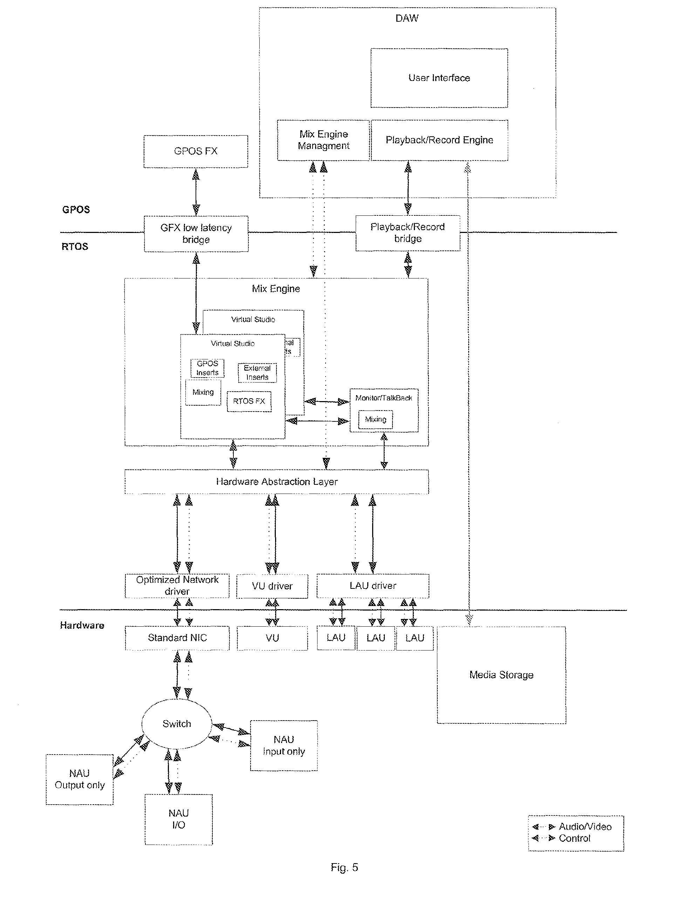

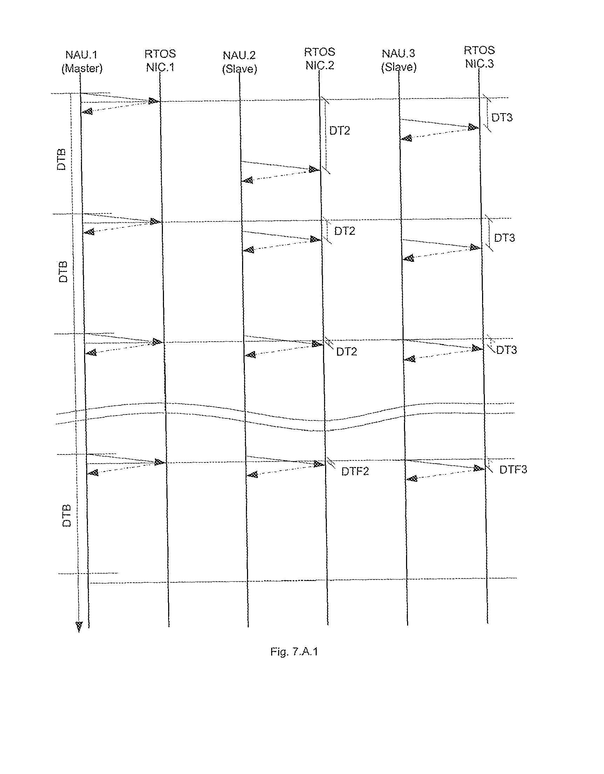

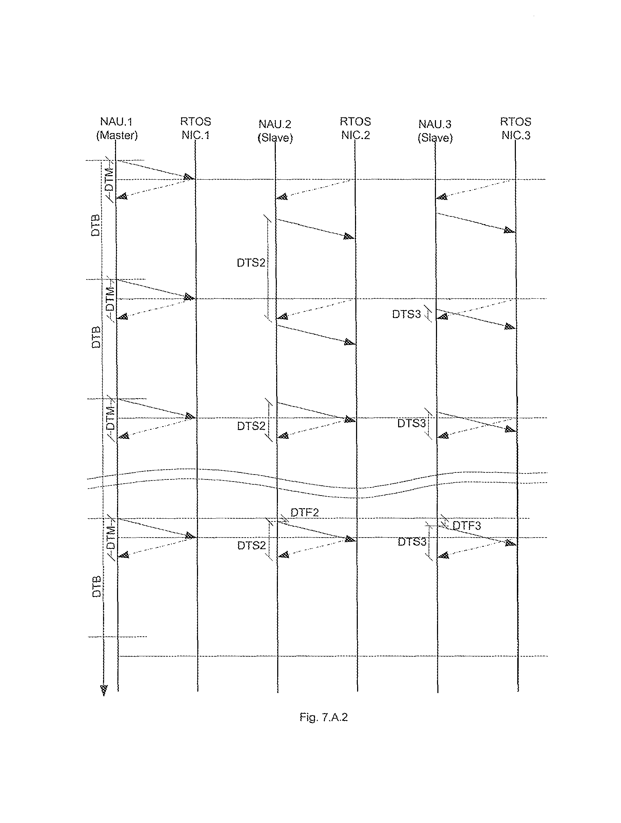

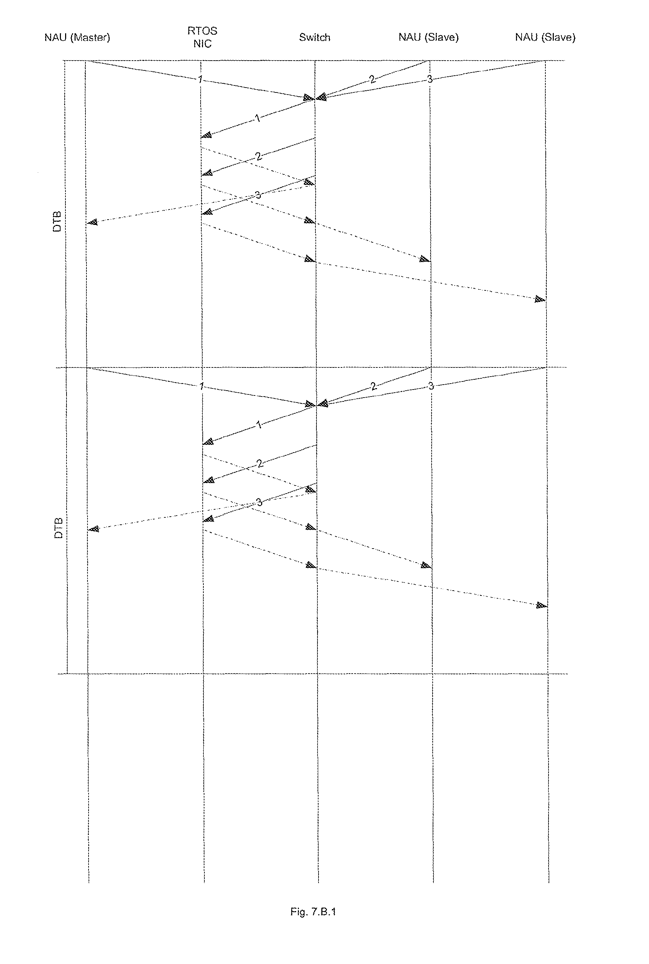

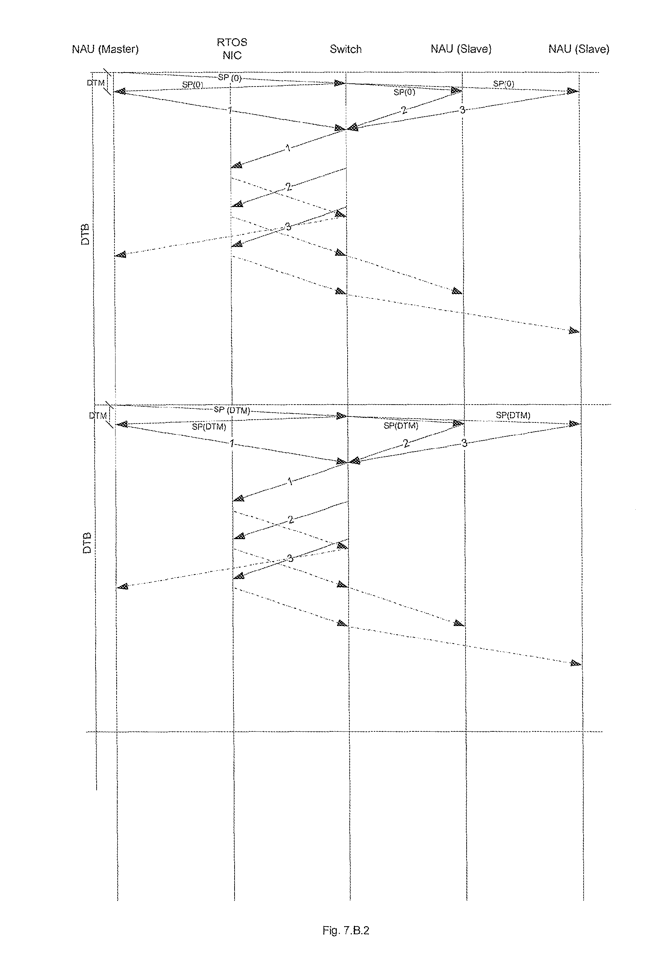

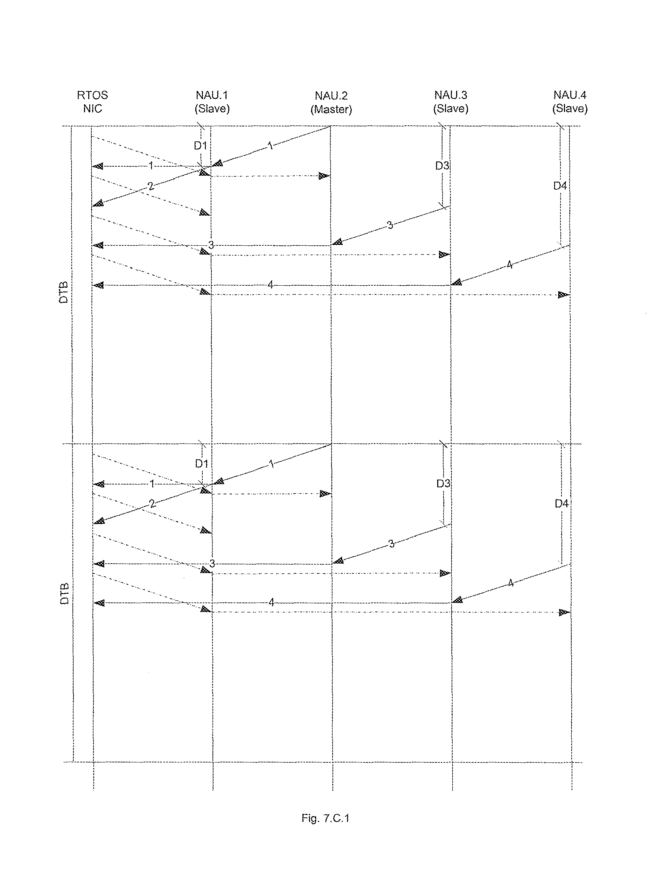

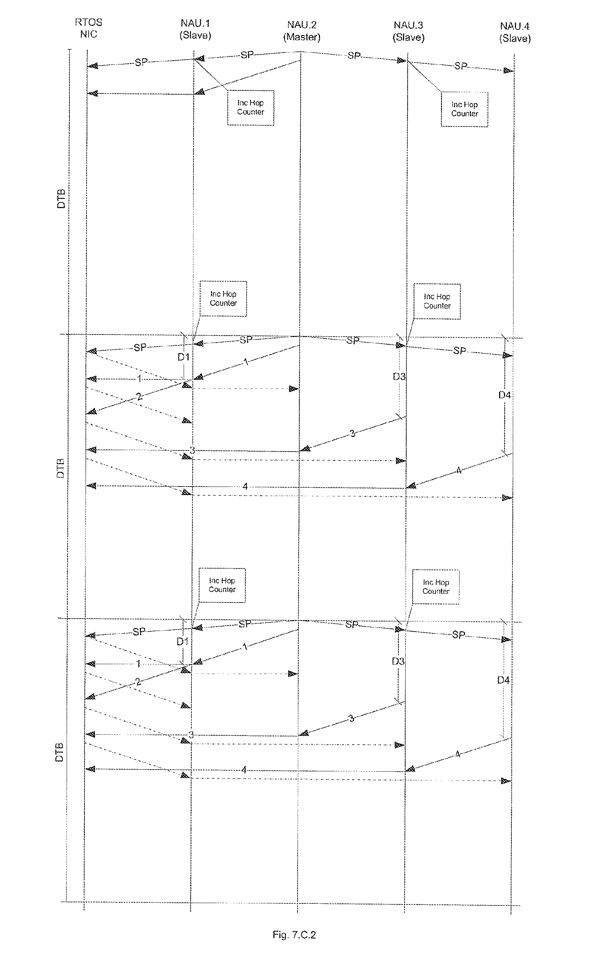

Usually in a standard digital audio system, one unit is assigned to be master audio unit, while all other units are assigned to be slave. In Figure 6 A this is accomplished by the Master audio Unit which comprises a block signal generator sending regular audio packets such as described in Figure 7A1. These packets are used by the RTOS as synchronization information and in turn, via the reading and writing means emit regular audio packets to all Audio Units in a synchronous fashion. Typical roundtrip (essentially constant and deterministic) delays from the Master Unit's sending packets to the Audio Units' receiving their individual audio packets can be compensated for to basically phase align all audio units to within a few microseconds (i.e. well under the typical period of an audio sample, which is 20.8 us at a sampling rate of 48 kHz). One way to accomplish this in this invention is to use the RTOS to measure the difference in arrival times between the data packets sent by the master unit and the data packets sent by the slave unit(s). Delta time DT of the packets sent by the Master Unit and those of the Slave unit(s) whereby this time difference is communicated over the network either directly or via additional processing (such as averaging over several blocks) to each Slave unit. Consequently, each Slave Unit uses said Delta Time information to control its local PLL reference signal (or equivalent digital circuitry) in order to align its local reference to the Master Unit reference. In the communication from the audio units and the RTOS, a small delay, preferably different for each audio unit is added while sending data packets to the RTOS. This delay value is named DTF value and represents the delay between the block period signal and the respective data response from the audio units. Such DTF values are a pre-defined target value for each Slave Unit usually but not necessarily being close to zero but larger to the RTOS responses time in order to avoid total synchronicity in arrival times and define the processing schedule of the received data packets. Figure 7A1 shows how such a Block phase alignment method can be accomplished between a Master Unit and a plurality of Slave units over a number of DTB (block signal), starting from an initial arbitrary phase relationship (between Master Unit and a number of Slave Units). The method described above also applies to a system where all network connected units are Slave Units, while the RTOS itself or a LAU Audio Unit, such as exemplified in Figure 5, are assigned as Master Unit.

In Figure 7A2 an alternate method to the above alignment process can also be implemented by the Master Unit measuring its own roundtrip delay DTM and subsequently informing the RTOS of such roundtrip delay either directly or via additional processing (such as averaging over several blocks). A roundtrip delay is calculated based on the delay between data packet sent to the RTOS and the corresponding response . In turn, the RTOS provides all slave units with such delay value to be matched by their own local PLL circuitry so as to phase-align the entire system, even without additional synchronisation links between a plurality of separate Audio I/O Units. Each Audio Unit's clock is produced by local PLL (Phase Lock Loop or digital equivalent) circuitry being controlled by the following formulae:

If DTS > DTM and DTS < DTB - DTM then slow-down the PLL clock

If DTS < DTM or DTS >= DTB - DTM then accelerate the PLL clock.

DTS is the measured roundtrip delay time of a slave unit

DTM is the measured roundtrip delay time of the master unit

As for the mechanism described in Figure 7A1, each slave unit is to be aligned to within pre-defined DTF values after initial lock-up phase is achieved.

In figure 6B a different implementation of the above mechanism is also described in a different configuration whereby a plurality of NAU Audio Units are connected via a network switch. In this configuration it cannot always be expected that such a switch will have low skew values between each of its ports to satisfy the requirement of being able to consider the transit delays through each of the secondary switch ports as being of sufficiently equivalent value. Furthermore, due to the fact that a switch cannot simultaneously transmit the data received from its multiple ports but needs to sequence the data in time, it is a preferred solution to align the multiple Audio I/O Units via an additional link, which is designed to convey a block alignment signal from the Master unit to the slave unit(s). Such a block signal frequency is determined based on the sampling frequency divided by the number of audio samples contained per data blocks. The division is preferably 16, 32 or 64 when audio packets correspond to an aggregate of 16, 32 or respectively 64 samples, but not limited to such frequencies. As a matter of fact other sync signals as typically used in audio and/or video installations, such as Video Reference (also called House Sync) may be used. Figure 7B1 shows a typical sequence of events when Master and Slave units are synchronized via such block alignment signals.

It is part of this invention however that when the said switch has low and deterministic skew between its primary and multiple secondary ports, that Master/Slave synchronization is accomplished without the requirement of an additional link by following means:

By issuing a broadcast SP sync packet at regular intervals to all NAUs connected to the network (typically at DTB block period rate), the Master NAU is able to align in a coarse manner all NAUs to its own bock alignment signal. If required, further precise alignment between Master and Slave NAUs is accomplished by the Master NAU measuring its own sync packet roundtrip delay DTM, subsequently transmitting this DTM value in subsequent SP sync packets. Each Slave unit further uses said DTM value to compensate for its own locally produced block alignment reference as described in Figure 7B2 using the same mechanism as already explained in Figure 7A2

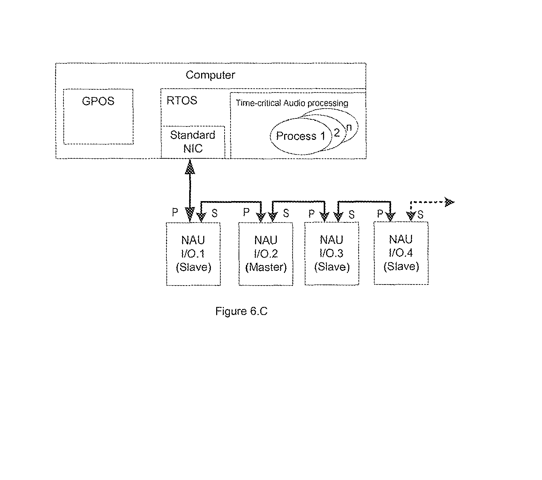

In Figure 6C a plurality of NAU Audio Units are connected in a daisy chain manner. In such a configuration, an initialization and ordering mechanism is initiated by a software initialization component under the RTOS to validate a given daisy chain sequence of NAUs and assign each Audio Unit a rank in the daisy chain topology. After the ordering phase it is again possible to phase-align all audio units by taking into account the propagation time from the primary to the secondary port of each audio unit, thereby compensating each audio unit's Phase Lock Loop by the cumulated propagation delays through the Network. This is achieved by means of the RTOS transmitting to each Audio Unit its rank position and value of such propagation delay or alternatively the cumulated propagation delay as incurred by each individual Audio unit. Figure 7C1 shows such alignment process in time, in particular care must be taken to properly delay and sequence audio packets sent by each NAU through the daisy chain topology to reduce or even avoid additional buffering requirements between all NAUs' incoming and outgoing ports. This avoids time contention between one NAU's own transmission of packets and the forwarding of packets from downstream NAUs.

An alternate embodiment is achieved by means of each Audio Unit incrementing a Hop Counter value, such Hop Counter value being part of the audio data packet or a separate synchronization data packet issued by the Master Audio Unit when forwarding such data from its primary port to its secondary port. To further allow a Master Unit to be assigned to any unit in a daisy chain configuration, for example second unit in the Figure 6C, such Hop Counter is similarly incremented when forwarded from secondary to primary port. Subsequently each NAU Audio Unit should use said Hop Counter value to automatically determine its position in the daisy chain and use said Hop Counter value to apply proper block alignment compensation to its local reference clock by the same means as already explained above. This is shown in Figure 7C2.

While the invention is particularly described for the transmission of audio data, it also applies to systems where the data packets contain other data types, for example video data, or any combination of a plurality of data types.

### Description of the elements in the figures

- GPOS: General Purpose Operating System
- RTOS: Real Time Operating System
- GUI: Graphical User Interface
- RAM: Random Access Memory
- NIC: Network Interface

- NIC 1, 2, 3: Network Interface 1, 2 or 3
- FX: Software module for sound enhancement
- GFX: Software modules for sound enhancement in GPOS world
- GPOS FX: Software modules for sound enhancement in GPOS world
- GFX1, 2, n: Various software modules for sound enhancement in GPOS world
- DAW: Digital Audio Workstation
- VU meter: instrument to display a signal level in Visual Units
- RTOS FX: Software modules for sound enhancement in RTOS world
- NAU: Network Audio Unit
- NAU I/O 1: Network Audio Unit 1 with input and/or output capabilities
- NAU I/O 2: Network Audio Unit 2 with input and/or output capabilities
- NAU I/O 3: Network Audio Unit 3 with input and/or output capabilities
- LAU: Local Audio Unit with input and/or output capabilities
- VU: Local Video Unit with input and/or output capabilities
- DT: Delay time between sending a packet and receiving a response
- DT1: DT for Audio Unit 1
- DT2: DT for Audio Unit 2
- DT3: DT for Audio Unit 3
- DTM: Delay Time Master
- DTS: Delay Time Slave
- DTS1: Delay Time Slave for Slave Audio Unit 1
- DTS2: Delay Time Slave for Slave Audio Unit 2
- DTS3: Delay Time Slave for Slave Audio Unit 3

- DTF: Delay Time Final after the end of the synchronization process
- DTF1: Delay Time Final after the end of the synchronization process for Audio unit 1
- DTF2: Delay Time Final after the end of the synchronization process for Audio unit 2
- DTF3: Delay Time Final after the end of the synchronization process for Audio unit 3
- SP: Synchronization Packet
- SP(0): Initial Synchronization Packet containing no DTM value, as DTM not yet measured
- SP (DTM): Subsequent Synchronization Packets containing previously measured DTM value
- D1: Delay Time from the block signal to the emit time by the Audio Unit 1
- D3: Delay Time from the block signal to the emit time by the Audio Unit 3
- D4: Delay Time from the block signal to the emit time by the Audio Unit 4
- RTG.A: RTOS to GPOS buffer A
- RTG.B: RTOS to GPOS buffer B
- GTR.A: GPOS to RTOS buffer A
- GTR.B: GPOS to RTOS buffer B

## Claims

1. System to process a plurality of audio sources, this system having at least a central processing unit CPU and input and output capabilities, this system being **characterized in that,** the central processing unit comprises at least two cores, each core representing a micro processing unit, at least one core being loaded with a standard operating system and at least one second core being loaded with a real-time operating system (RTOS) in charge of processing audio signals which comprise audio sources and audio outputs.

2. System of claim 1, **characterized in that** the standard operating system (GPOS) comprises audio processing capabilities in charge of processing having non-critical audio time response.

3. System of claims 1 or 2, **characterized in that** the standard operating system (GPOS) comprises audio enhancement routines (GPOS-FX) which are accessible by the real-time operating system (RTOS) via interface communication channels.

4. System of claim 3, **characterized in that** the software interface comprises buffer memories to take into account the processing time difference between the real-time operating system (RTOS) and the standard operating system (GPOS).

5. System of claim 4, **characterized in that** the buffer memory is a double buffer having simultaneous read/write protection.

6. System of any of the claims 1 to 5, **characterized in that** further comprises at least one audio unit (LAU, NAU) to acquire and/or produce audio signals, said audio unit (LAU, NAU) comprising a block generator producing a block signal (DTB) which synchronizes the real-time operating system (RTOS).

7. System according to claim 6, **characterized in that** the frequency of the block signal (DTB) is adjusted in view of the number of audio signals to be processed.

8. System according to claims 6 or 7 in which it further comprises a network interface to connect the audio unit (NAU), said real-time operating system (RTOS) having a dedicated driver to said network interface (NIC) to manage the data flow of said network interface.

9. System according to any of the claims 6 to 8, **characterized in that** it comprises a plurality of audio units from which at least one of them is a master audio unit and comprises the block generator (DTB) which synchronizes the real-time operating system (RTOS), the other audio units being slave audio units, said operating system having reading and/or writing means to the audio units, said reading and/or writing means being synchronized by the block signal.

10. System according to any of the claims 6 to 9, said slave audio units comprising a PLL clock generator which is synchronized by the reading and/or writing means of the real-time operating system (RTOS).

11. System according to any of the claims 8 to 10, **characterized in that** it comprises a plurality of network interfaces which are connected to the audio units, each network interface being pre-loaded with data, said data being sent according a trigger information derived from the block signal (DTB).

12. System according to any of the claims 8 to 10, **characterized in that** it comprises a switch between the network interface and the plurality of audio units, the real-time operating system (RTOS) sending synchronization information to the audio units via the switch in broadcast mode, said synchronization information being triggered by the block signal (DTB).

13. System according to any of the claims 9 or 10, **characterized in that** it comprises a switch between the network interface and the audio units, the master audio unit feeding the slave audio units via a dedicated line.

14. System according to claim 10, **characterized in that** the audio units are serially connected, the delay between the real-time operating system (RTOS) performing a read and/or write operation to the first audio unit and to a further serially connected audio unit being stored in said further serially connected audio unit, said delay being taken into account to synchronize the PLL clock generator of said audio unit.
